# FASCICULE DE BREVET EUROPEEN

(11) **EP 3 487 818 B1**
(45) Date de publication et mention de la délivrance du brevet: **30.12.2020**
(21) Numéro de dépôt: 17720554.9
(22) Date de dépôt: 05.04.2017
(51) Int. Cl.: C03B 35/20, C03B 40/00, C03B 23/03, C03B 35/14, C03B 35/24, C03B 23/025, C03B 23/035

(54) **SUPPORT DE VERRE A ASPIRATION ET PROCEDE ASSOCIE**
SAUGSTÜTZE FÜR GLAS UND DAZU GEHÖRENDEM VERFAHREN
SUCTION SUPPORT FOR GLASS AND ASSOCIATED PROCESS

(30) Priorité: 25.07.2016 FR 1657136; 25.07.2016 FR 1657135
(43) Date de publication de la demande: 29.05.2019
(73) Titulaire: SAINT-GOBAIN GLASS FRANCE, 92400 Courbevoie (FR)
(72) Inventeur: PALMANTIER, Arthur, 52064 AACHEN (DE); ZEICHNER, Achim, 52134 HERZOGENRATH (DE); PENNERS, Jack, 52134 HERZOGENRATH (DE); RADERMACHER, Herbert, 4730 RAEREN (BE); SCHILLINGS, Peter, 52249 ESCHWEILER (DE)
(74) Mandataire: Saint-Gobain Recherche
(86) Numéro de dépôt international: PCT/FR2017/050814
(87) Numéro de publication internationale: WO 2018/020087

(56) Documents cités:
- WO-A2-2004/087590
- JP-A- 2000 327 355
- US-A- 5 865 866
- US-B1- 6 574 992

## Description

L'invention concerne un cadre pour supporter la périphérie d'une feuille de verre, ledit cadre étant muni d'un système d'aspiration plaquant la feuille contre le cadre pour mieux la maintenir en place sur le cadre malgré le déplacement de celui-ci.

Le terme « cadre » désigne un support du type anneau entourant une ouverture (également appelée « lumière »). On connait de nombreux procédés de bombage. Selon les EP448447 ou EP0705798, des feuilles de verre sont bombées par gravité sur des cadres doubles, le verre passant d'un cadre ébaucheur à un cadre finisseur par escamotage d'un cadre par rapport à l'autre. L'usage de ce type de dispositif permet d'exercer un bombage progressif et d'éviter le phénomène du contre-bombage dans les coins de la feuille. Selon certains procédés comme décrit dans les WO2004/087590 ou WO2006072721, le verre est d'abord bombé par gravité sur un cadre de bombage, puis bombé par pressage contre une forme supérieure de bombage ou une forme inférieure de bombage. Ces procédés nécessitent la réalisation d'une multiplicité de supports de bombage par gravités défilant les uns derrière les autres en un train de supports. Selon EP255422 une feuille de verre est bombée par un soufflage ascendant contre une forme supérieure de bombage. On peut également citer le US5906668. Selon US6754992 on dispose une feuille de verre sur un cadre de formage ledit cadre permettant aussi le trempage de la feuille de verre.

Dans les procédés classiques de bombage par gravité, les supports de bombage défilent les uns derrière les autres dans un four tunnel porté à la température de déformation plastique du verre. Dans ces procédés les supports ne sont pas soumis à de grandes accélérations de sorte que la feuille reste bien à sa place sur le support sans qu'il ne soit besoin de la maintenir sur le support. La présente invention offre une solution pour maintenir bien en place une feuille de verre sur un cadre devant supporter une feuille de verre si le cadre est soumis à de fortes accélérations ou décélérations, notamment d'au moins 1500 mm/sec², voire même d'au moins 3000 mm/sec², voire même d'au moins 5000 mm/sec². Généralement, l'accélération ou décélération reste inférieure à 7500 mm/sec². L'aspiration exercée sur la feuille par le système d'aspiration du cadre aspirant est en fonctionnement pendant ladite accélération ou décélération.

L'invention concerne en premier lieu un cadre pour supporter une feuille de verre, dit « cadre aspirant », comprenant une piste de contact pour recevoir la périphérie de la face inférieure de la feuille de verre, et comprenant un système d'aspiration apte à s'exercer sur la face inférieure de la feuille pour accentuer le maintien de la feuille par ledit support. L'aspiration est de préférence suffisante pour que ce maintien conduise à l'immobilisation du verre par rapport au cadre aspirant, c'est-à-dire sans que le verre ne puisse se déplacer latéralement par rapport au cadre aspirant, et ce, malgré une forte accélération ou décélération subie par le cadre aspirant supportant le verre. Le terme « latéral » ou « latéralement » attaché à un déplacement, signifie que ce déplacement est horizontal ou comprend au moins une composante horizontale.

Le cadre aspirant a généralement une largeur comprise dans le domaine allant de 3 à 150 mm et plus généralement de 3 à 90 mm. Ces valeurs sont données après équipement dudit cadre aspirant avec un matériau fibreux (bien connu de l'homme du métier) entrant en contact avec le verre afin d'adoucir le contact du cadre aspirant avec le verre et d'isoler thermiquement le verre du moule. Ces valeurs de largeur incluent donc l'éventuel élargissement de la piste de contact dû au matériau fibreux. Une large piste de contact, par exemple 25 mm ou plus, notamment une largeur comprise dans le domaine allant de 25 à 90 mm et de préférence dans le domaine allant de 50 à 90 mm, est préférée car cela permet de répartir le poids de la feuille de verre sur une surface plus grande et donc de réduire les risques de marquage du verre, notamment aux hautes températures (notamment de 400 à 750°C). De plus, en raison du frottement plus grand, une surface de contact plus grande procure un plus grand maintien du verre sur le cadre aspirant et la position du verre sur ce support est mieux préservée malgré les déplacements latéraux aux fortes accélérations ou décélérations. Pendant le déplacement latéral du support de bombage, généralement, la face supérieure du verre n'est en contact avec aucun outil, c'est-à-dire est entièrement en contact avec l'atmosphère gazeuse.

L'aspiration peut être exercée sur la face inférieure de la feuille, soit au travers de la piste de contact du cadre en périphérie de la feuille, soit en zone interne au cadre pour aspirer la zone centrale de la feuille. La notion de périphérie de la feuille peut dépendre de sa taille, puisque pour une grande feuille, on peut considérer que le support peut aller plus loin en direction du centre de la feuille à partie du bord. Le cadre aspirant selon l'invention ne vient généralement pas en contact avec le verre à l'intérieur de cette zone périphérique, c'est-à-dire pas plus loin que 150 mm du bord du verre et généralement pas plus loin que 40 mm du bord du verre. Le cadre comprend une piste de contact avec le verre, cette piste de contact étant suffisamment rigide pour ne pas se déformer sous le poids du verre ni pendant tout le temps qu'il supporte le verre. Le cadre est formé d'un cadre métallique dont la surface supérieure est usinée à la forme souhaitée pour le verre, cette piste étant recouverte d'un matériau fibreux adoucissant le contact avec le verre. Le cadre métallique est rigide et ne se déforme pas au cours de son usage dans le cadre de la présente invention. Le matériau fibreux est flexible et poreux et prend la forme de la surface usinée supérieure. En plus d'adoucir le contact avec le verre, il a également un rôle d'isolant thermique. La piste de contact est donc en réalité constituée par la face supérieure de ce matériau fibreux souple mais qui ne se déforme pas à l'usage grâce au cadre rigide qui le supporte et lui donne sa forme. Ce matériau en fibre réfractaire couramment utilisé par l'homme du métier pour d'adoucir le contact d'un outil métallique avec le verre est généralement du type tissé ou non-tissé ou tricot et présente généralement une épaisseur allant de 0,5 à 12 mm. Sur cette épaisseur totale le matériau peut être constitué de plusieurs couches d'un même matériau ou de matériaux différents.

Ainsi, selon une variante, l'aspiration est exercée au travers d'orifices (c'est-à-dire d'ouvertures) dans la piste de contact du cadre aspirant. Dans ce cas, le cadre comprend au moins une chambre close sous la piste de contact, des orifices traversant le cadre, de la chambre close à la piste de contact, c'est-à-dire au travers de la surface usinée du cadre et du matériau fibreux en contact direct avec le verre. L'intérieur de la chambre close est relié par une canalisation à un système procurant du vide. Une pression subatmosphérique peut ainsi être créée dans la chambre close pour provoquer une aspiration au travers des orifices débouchant dans la surface usinée supérieure du cadre, cette aspiration se prolongeant au travers du matériau fibreux intercalaire de contact pour le verre. Le matériau fibreux laisse passer les gaz (non-étanchéïté du matériau fibreux aux gaz) et l'on considère que l'espace entre les fibres sont des orifices (c'est-à-dire des ouvertures) laissant passer l'aspiration. Le verre est fortement maintenu sur la piste de contact grâce à l'aspiration. Généralement, on ne cherche pas à accentuer le bombage du verre par l'aspiration, mais le verre se bombe tout de même par gravité quand il est à sa température de déformation plastique. L'aspiration a ici plutôt une action limitante sur le bombage et donne une possibilité d'influencer celui-ci. En effet, lors d'un bombage par gravité sur un cadre, le verre glisse sur le cadre au cours du bombage et du fait du bombage. Lors de ce glissement, le bord du verre se dirige légèrement vers le centre du cadre. L'aspiration exercée sur le verre par le cadre aspirant selon l'invention tend à retenir le verre et tend donc à limiter ce glissement du verre. On peut donc jouer sur l'aspiration pour contrôler le bombage par gravité. Une forte aspiration réduit l'importance du bombage par gravité.

Le cadre aspirant est d'abord un cadre permettant le transport du verre avec une forte accélération ou décélération. La piste de contact a une forme correspondant à celle souhaitée en fin de supportage sur le cadre aspirant. Enfin, une piste de contact plus large peut être équipée plus facilement d'un système d'aspiration s'exerçant sur la face inférieure de la feuille. Selon cette variante, la piste de contact du cadre aspirant est munie d'orifices au travers desquels l'aspiration est exercée. Dans le cas d'une surface de contact étroite (par exemple 3mm), le poids du verre est concentré sur une plus petite surface, et les risques de marquage sont plus élevés. De plus, une piste aussi étroite peut être plus difficilement équipée d'un système d'aspiration efficace. C'est pourquoi, selon cette variante, le cadre aspirant combine avantageusement une large piste de contact, notamment ayant une largeur d'au moins 25 mm, notamment comprise dans le domaine allant de 25 à 90 mm et de préférence dans le domaine allant de 50 à 90 mm, et un système d'aspiration s'exerçant sur la face inférieure de la feuille au travers d'orifices dans la piste de contact. La largeur du cadre et l'aspiration sont suffisantes pour rendre le verre solidaire du cadre aspirant pendant une accélération ou décélération d'au moins 1500 mm/sec², voire même d'au moins 3000 mm/sec², voire même d'au moins 5000 mm/sec².

Pendant l'aspiration, le verre est maintenu sur le cadre sans bouger latéralement par rapport à lui, malgré une forte accélération ou décélération du cadre portant le verre. Dans ces instants, le verre est donc fixe latéralement par rapport au cadre et solidaire du cadre aspirant malgré une forte accélération ou décélération. L'aspiration au travers de la piste de contact peut être exercée au travers d'une partie seulement de celle-ci, notamment en deux ou trois ou quatre ou cinq ou six zones séparées. Il suffit alors de percer la surface usinée du cadre aspirant seulement aux endroits correspondant à ces zones, ce qui réduit très sensiblement les coûts de fabrication par rapport à une situation selon laquelle l'intégralité de la surface usinée du cadre aspirant est munie d'orifices. Sous chaque zone percée est ménagée une chambre close pouvant être mise sous vide par une canalisation reliée à un système d'aspiration. L'aspiration est donc uniquement générée dans les zones locales. L'effet de maintien sur le cadre aspirant est suffisant et le système le permettant est moins complexe que si l'aspiration concernait toute la piste de contact du cadre aspirant. Il convient que le contact entre la piste de contact du cadre aspirant et le verre soit suffisant, au moins en certaines zones munies d'orifices d'aspiration, pour que le vide puisse se créer. En effet, si les formes de la piste de contact du cadre aspirant et celle du verre sont trop différentes, alors l'aspiration ne fera que créer un flux d'air ininterrompu entre le cadre aspirant et le verre.

Selon une autre variante, l'aspiration est exercée sur la zone centrale de la feuille au travers de l'intérieur du cadre aspirant. Dans ce cas, le cadre aspirant est muni d'un caisson disposé sous la zone centrale de la face inférieure de la feuille pour communiquer à celle-ci une pression subatmosphérique. Ce caisson est relié de façon étanche au cadre pour pouvoir tenir le vide sous le verre. Le caisson est relié par une canalisation à un système procurant du vide. Dans cette configuration et selon l'intensité du vide produit, l'aspiration peut produire un bombage du verre. Généralement, la piste de contact n'est pas plane mais a une forme correspondant à celle souhaitée après bombage sur le cadre aspirant. Selon cette variante, il convient qu'une étanchéité suffisante entre la piste de contact et le verre se forme sur toute la périphérie du verre dès que le verre est posé sur la piste de contact, pour que l'aspiration puisse jouer son rôle.

Selon ces deux variantes, compte tenu de ce qu'un matériau fibreux recouvre de préférence le cadre aspirant pour adoucir le contact avec le verre, l'étanchéité entre le verre et la piste de contact ne peut pas être parfaite, mais elle doit simplement être suffisante pour qu'une force de pression appuis sur le verre pour plaquer la feuille contre la piste de contact. La porosité ouverte du matériau fibreux joue un rôle sur le vide pouvant être créé par l'aspiration et donc aussi sur la force de pression s'exerçant sur le verre par le dessus.

En plus de l'effet de maintien sur le cadre aspirant, un bombage thermique est généralement attendu pendant l'aspiration. La forme de la piste de contact n'a alors de préférence pas exactement la forme de la périphérie de la feuille au début du contact, mais celle attendu en fin de bombage sur ledit cadre aspirant. Il ne faut donc pas que la forme de la feuille au début du contact soit très différente de celle attendu en fin de bombage, car alors l'étanchéité entre la piste de contact et la feuille pourrait avoir du mal à se créer. C'est pourquoi, l'éventuel bombage sur le cadre aspirant est relativement modéré et peut par exemple être du type prébombage, ce prébombage étant suivi d'un bombage plus accentué par un autre moyen de bombage, notamment par pressage. Toute feuille de verre a naturellement une certaine flexibilité, de sorte que le simple fait de la poser sur le cadre aspirant va lui faire tendre à suivre dans une certaine mesure et sous l'effet de son propre poids, la forme du contour du cadre aspirant, même avant tout bombage. Il suffit que le contour épouse le cadre aspirant sur une certaine aire de contact pour que l'aspiration produise son effet. Un contact partiel au début de la pose de la feuille sur la cadre aspirant peut donc suffire. Ceci vaut surtout pour le cas de l'aspiration au travers d'orifices dans la piste de contact du cadre aspirant. Dans ce cas, on peut même éventuellement limiter l'aspiration à ces zones de contact avec le cadre aspirant dès la pose du verre sur lui. Cependant, il faut noter que pour les zones du cadre aspirant sans contact avec le verre dès la pose du verre sur lui, l'écart entre le verre et le cadre peut éventuellement se combler rapidement sous l'effet conjugué de l'aspiration et du bombage par gravité.

L'aspiration à l'origine du maintien du verre sur le cadre aspirant est enclenchée avant une accélération à venir, de nature à déstabiliser le verre en l'absence de cette aspiration. Une fois que l'accélération critique ou le freinage (c'est-à-dire décélération) critique est passée ou si le cadre aspirant doit être déchargé du verre, alors l'aspiration peut être arrêtée. Le système d'aspiration produit par exemple une pression subatmosphérique de 700 mbars (c'est-à-dire un vide de 300 mbars). L'intensité du vide en mbar dépend de la façon dont le verre est aspiré. Pour une aspiration à travers la piste de contact, l'aspiration est plus importante que celle utilisé lorsque l'on aspire sur la surface centrale du verre au travers de l'intérieur du cadre.

Dès que l'aspiration est arrêtée, la pression remonte assez rapidement jusqu'à la pression atmosphérique puisque l'air ambiant peut passer au moins par la porosité ouverte du matériau réfractaire disposé entre la piste rigide du cadre aspirant et le verre. Par ailleurs, concomitamment à l'arrêt de l'aspiration, la canalisation apportant le vide est remise à la pression atmosphérique.

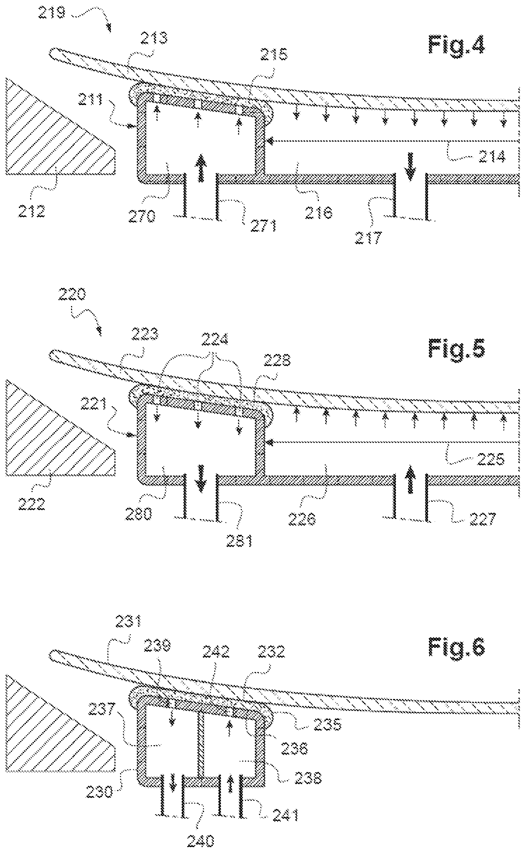

Le cadre aspirant selon l'invention peut également comprendre un système de soufflage vers la face inférieure du verre. Ce soufflage peut avoir pour but d'aider au réglage de la force de maintien appuyant sur la face supérieure du verre tout en la réduisant, ou de réduire le risque de marquage du verre par le contact avec le cadre aspirant. On donne ci-après trois variantes de tels systèmes aspiro-soufflant :
A. l'aspiration étant réalisée sur la zone centrale de la feuille au travers de l'intérieur du cadre aspirant (et non pas au travers de la piste de contact), on génère un soufflage au travers de la piste de contact et du matériau réfractaire fibreux qui la recouvre. L'objectif est de réduire le risque de marquage du verre avec le cadre aspirant. Le soufflage crée un coussin d'air au niveau de la zone de contact verre/cadre, ce qui réduit le risque de marquage du verre. Parallèlement, on aspire la zone centrale du verre pour maintenir le verre sur le cadre. Pour réaliser ce soufflage au travers de la piste de contact, on utilise les moyens déjà décrits pour réaliser une aspiration au travers de la piste de contact, sauf que le système générant du vide est remplacé par un système générant une pression. Ce système est plus particulièrement décrit sur la figure 4.
B. l'aspiration étant réalisée au travers de la piste de contact du cadre aspirant, un soufflage est exercé en parallèle sur la zone centrale de la feuille au travers de l'intérieur du cadre aspirant ; un caisson disposé sous la zone centrale de la face inférieure de la feuille permet de communiquer à celle-ci une pression supérieure à la pression atmosphérique. Ce caisson est relié de façon étanche au cadre aspirant pour pouvoir tenir la pression sous le verre. Il est relié par une canalisation à un système procurant une pression. L'objectif du soufflage est de réduire le risque de marquage du verre avec le cadre aspirant. On aspire à travers le cadre pour maintenir le verre en position au niveau de la zone de contact verre/cadre et parallèlement, on souffle sur la zone centrale du verre pour créer un coussin d'air et réduire le poids relatif du verre sur la piste de contact. Ce système est plus particulièrement décrit sur la figure 5.
C. l'aspiration étant réalisée au travers d'une zone de la piste de contact du cadre aspirant, un soufflage est exercé en parallèle sur une autre zone de la piste de contact du cadre aspirant. Plusieurs chambres closes peuvent ainsi être ménagées sous la surface usinée du cadre aspirant, ladite surface usinée étant revêtue de matériau réfractaire fibreux afin de recevoir le verre, au moins l'une de ces chambres, dite chambre aspirante, étant reliée à un système de création de vide par une canalisation et servant à aspirer la face inférieure du verre, au moins une autre de ces chambres, dite chambre soufflante, étant mise sous pression par une canalisation et servant à souffler sur la face inférieure du verre. Une chambre aspirante et une chambre soufflante peuvent être juxtaposées pour venir l'une après l'autre quand on part du bord du vitrage pour aller vers le centre. On peut notamment placer la chambre aspirante plus près du bord du vitrage que la chambre soufflante. L'aspiration sert à mieux maintenir le verre sur le cadre aspirant. L'aspiration passe au travers d'orifices présents dans la surface supérieure usinée du cadre aspirant, puis au travers du matériau fibreux (dont on assimile la porosité laissant passer les gaz à des orifices). Le soufflage d'air est aussi exercé au travers d'orifices percés dans la surface usinée ainsi qu'au travers du matériau fibreux intercalaire de contact pour le verre. L'objectif est de réduire le risque de marquage du verre dû au contact du verre avec le cadre aspirant. On aspire à travers le cadre pour maintenir le verre en position au niveau de la zone de contact verre/cadre correspondant et on souffle pour créer un coussin d'air entre le verre et le cadre aspirant et réduire le risque de marquage du verre. Ce système est plus particulièrement décrit sur la figure 6.

Ainsi, selon l'invention, le cadre aspirant peut également comprendre un système de soufflage apte à exercer un soufflage au travers d'au moins une zone locale dite zone soufflante de la piste de contact du cadre aspirant. Le cadre aspirant peut comprendre au moins une chambre close sous la zone soufflante de la piste de contact, dite chambre close soufflante, des orifices traversant le cadre entre la chambre close soufflante et la piste de contact, la chambre close soufflante étant reliée au système de soufflage.

L'invention concerne également un dispositif de transport d'une feuille de verre comprenant le cadre aspirant selon l'invention et un moyen de convoyage dudit cadre aspirant. Le moyen de convoyage peut conférer au cadre aspirant une accélération ou décélération d'au moins 1500 mm/sec², voire même d'au moins 3000 mm/sec², voire même d'au moins 5000 mm/sec², et généralement inférieure à 7500 mm/sec². Cette accélération ou décélération est généralement exercée latéralement, c'est-à-dire à l'horizontale ou avec au moins une composante horizontale. De telles accélérations ou décélérations sont susceptibles de déstabiliser le verre sur son support en l'absence de l'aspiration de maintien selon l'invention. Le moyen de convoyage peut par exemple servir à déplacer le verre d'une position à une autre dans un procédé de traitement du verre, notamment un dispositif de bombage thermique. Notamment, ces différentes positions peuvent correspondre à celles permettant à des outils d'interagir avec le verre. Ces outils sont généralement au-dessus du verre. Le cadre aspirant selon l'invention présente une utilité notamment pour transporter rapidement et avec une forte accélération ou décélération une feuille de verre entre deux positions, notamment dans une enceinte chauffée à la température de bombage thermique du verre. Le cadre aspirant fait ainsi la navette entre ces deux positions avec arrêt à chacune d'elle. Par exemple, une première position peut être une position à laquelle le cadre aspirant reçoit une feuille de verre larguée par une forme supérieure et la deuxième position peut être une position à laquelle le verre est bombée contre une forme supérieure. Le cadre aspirant fait constamment l'aller (portant du verre) et retour (sans verre) entre ces deux positions auxquelles il s'arrête.

L'invention concerne également un dispositif de bombage thermique d'une feuille de verre comprenant le dispositif de transport selon l'invention et une enceinte de chauffage, le dispositif de transport permettant le convoyage du cadre dans l'enceinte.

Le bombage thermique est un bombage à une température de déformation plastique du verre, généralement comprise dans le domaine allant de 550 à 750 °C. Notamment, le dispositif de bombage peut comprendre un support de bombage comprenant le cadre aspirant et un moule supplémentaire de bombage, l'un de ces deux éléments entre le cadre aspirant et le moule de bombage étant entouré par l'autre vue de dessus, au moins l'un de ces deux éléments pouvant être animé d'un mouvement vertical relatif par rapport à l'autre. Ainsi, ces différents supports peuvent prendre en charge le verre alternativement l'un après l'autre, le support montant plus haut que l'autre chargeant le verre par sa périphérie. Un prébombage par gravité peut éventuellement être exercé sur le cadre aspirant, puis un bombage supplémentaire par gravité peut être exercé sur le moule supplémentaire de bombage.

Le cadre aspirant selon l'invention peut le cas échéant servir de cadre de pressage contre une forme supérieure. Selon cette variante, le cadre aspirant se déplace avec une forte accélération ou décélération en maintenant le verre en position grâce à l'aspiration selon l'invention, un prébombage par gravité du verre ayant lieu sur lui avant, pendant ou après le déplacement, puis le cadre aspirant portant le verre se positionne sous une forme supérieure de bombage, puis le cadre aspirant et la forme supérieure de bombage ont un mouvement vertical relatif les rapprochant pour presser le verre entre eux et exercer un bombage par pressage. Le cadre aspirant et la forme supérieure se séparent ensuite puis le verre est évacué de la zone de pressage pour être refroidi.

Un procédé de bombage utilisant le procédé de bombage selon l'invention comprend le convoyage du cadre aspirant supportant une feuille de verre dans une enceinte portée à la température de déformation plastique du verre, et le bombage de la feuille. Notamment, le bombage peut être réalisé au moins partiellement sur le cadre aspirant, notamment par gravité. Le bombage peut être réalisé sur un support de bombage comprenant le cadre aspirant et un moule de bombage, l'un de ces deux éléments entre le cadre aspirant et le moule de bombage étant entouré par l'autre vue de dessus, au moins l'un de ces deux éléments étant animé d'un mouvement vertical relatif par rapport à l'autre, pour faire passer la feuille de verre du cadre aspirant au moule de bombage, l'aspiration exercée sur la feuille par le système d'aspiration du cadre aspirant n'étant pas en fonctionnement pendant ce passage.

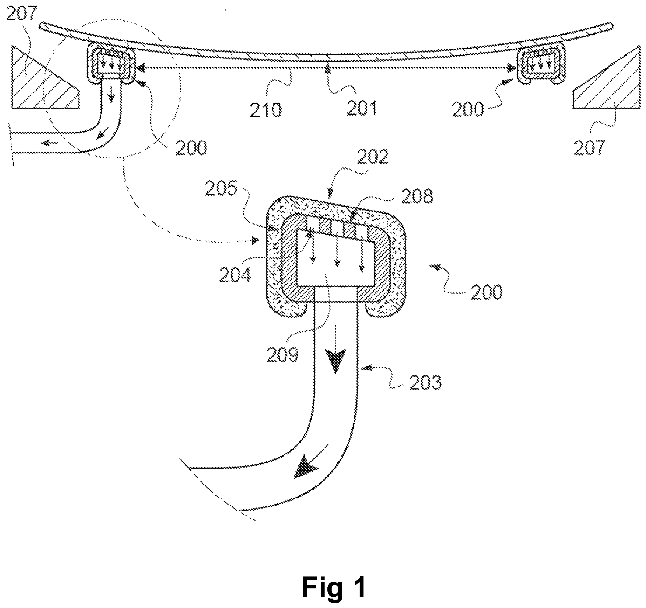

La figure 1 représente un cadre aspirant 200 supportant une feuille de verre 201 par une piste de contact 202. Vue de dessus, le cadre aspirant ainsi que sa piste de contact, a la forme d'un anneau entourant une ouverture 210. Cette piste de contact est constituée d'un matériau fibreux réfractaire 205 bien connu de l'homme du métier pour équiper les outils devant venir au contact du verre chaud. Ce matériau fibreux recouvre notamment la surface supérieure usinée 208 du cadre aspirant sous lequel a été construite une chambre close 209 pouvant être mise sous vide, ladite surface supérieure 208 étant percée. Le matériau fibreux est suffisamment souple pour suivre la forme de la surface supérieure usinée 208 du cadre aspirant. L'intérieur de la chambre close 209 est relié à un système de création de vide par la canalisation 203. L'aspiration passe au travers d'orifices 204 présents dans la surface supérieure usinée du cadre aspirant, puis au travers du matériau fibreux 205, ce dernier n'étant à dessein pas étanche aux gaz. On considère qu'il comprend lui aussi des orifices laissant passer le flux d'air aspiré. Selon cette réalisation, la piste de contact est légèrement courbée. Un léger prébombage peut être exercé sur ce cadre aspirant. Un autre outil de bombage est constitué d'un cadre supplémentaire 207 faisant office de moule de bombage, lequel entoure le cadre aspirant 200. Le moment venu, le cadre aspirant descend permettant au cadre supplémentaire 207 de prendre en charge le verre pour le cas échéant continuer le bombage par gravité. L'aspiration est déclenchée pour maintenir la feuille sur le cadre aspirant pendant le transfert avec une haute accélération ou décélération du verre. Ce temps de transfert peut être mis à profit pour qu'un prébombage par gravité soit exercé sur le cadre aspirant. Une fois le verre en bonne position, l'aspiration est arrêtée pour que le cadre aspirant ne retienne plus le verre et que le cadre supplémentaire puisse prendre la feuille en charge.

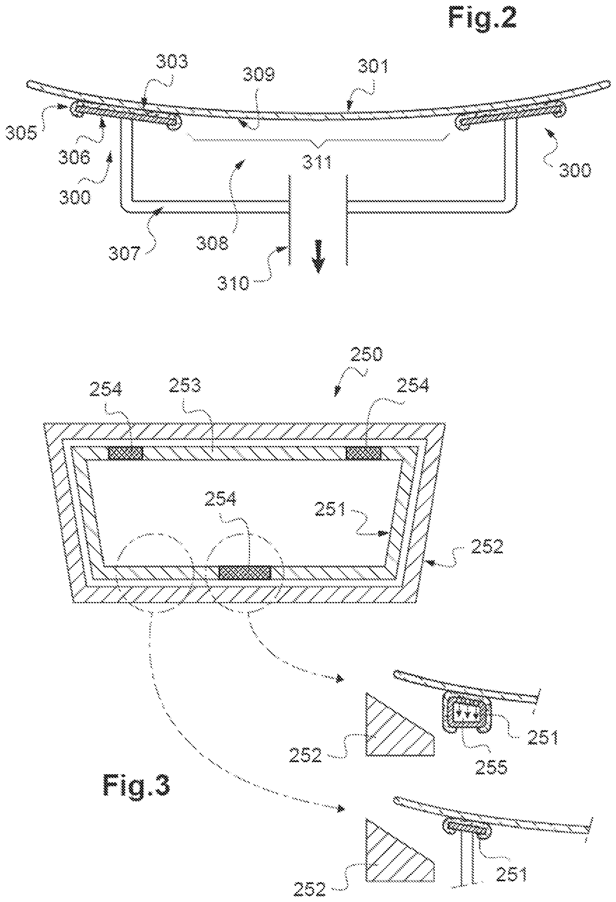

La figure 2 représente un cadre aspirant 300 supportant une feuille de verre 301 par une piste de contact 303. Cette piste de contact est constituée d'un matériau fibreux réfractaire 305 bien connu de l'homme du métier pour équiper les outils devant venir au contact du verre chaud. Ce matériau fibreux recouvre notamment la surface supérieure d'un cadre métallique 306 en forme d'anneau entourant une ouverture 311. Le cadre métallique 306 donne la forme souhaitée à la piste de contact, le matériau fibreux étant suffisamment souple pour suivre la forme de la face supérieure du cadre métallique 306. Le cadre est relié par son côté opposé à la piste de contact à un caisson 307 formant un volume 308 sous la surface inférieure 309 de la feuille de verre. Le caisson est relié à une canalisation 310 permettant de générer un vide dans le volume 308, après dépose d'une feuille de verre sur la piste de contact. Ainsi, l'aspiration est exercée sur la zone centrale de la face inférieure 309 de la feuille, au travers de l'ouverture 311 entourée par le cadre aspirant. Ce vide accentue la force s'exerçant sur la face supérieure de la feuille 301. La feuille repose ainsi plus fortement sur le cadre aspirant et est ainsi mieux maintenue en position malgré les déplacements latéraux du cadre aspirant.

La figure 3 représente en vue de dessus un dispositif 250 de bombage d'une feuille de verre comprenant un cadre aspirant 251 et un cadre supplémentaire 252 (faisant office de moule de bombage) qui l'entoure. La piste de contact 253 du cadre aspirant comprend 3 zones 254 (hachurées) percées d'orifices pour que l'aspiration puisse s'exercer. L'aspiration est donc exercée au travers d'une partie seulement de la piste de contact du cadre aspirant. Sous la zone percée a été ménagée une chambre close 255 pouvant être mise sous vide par des canalisations (non représentées) reliées à un système d'aspiration. L'aspiration est donc générée dans 3 zones locales seulement raccordées à un système d'aspiration. Cette aspiration locale réduit les coûts d'outillage et simplifie le système d'aspiration dans le cadre aspirant. L'effet de maintien sur le cadre aspirant est suffisant et le système le permettant est moins complexe.

La figure 4 représente en coupe vue de côté un dispositif 219 de bombage d'une feuille de verre 213 comprenant un cadre aspirant 211 et un cadre supplémentaire 212 (faisant office de moule de bombage) qui l'entoure. L'aspiration est produite en zone centrale du vitrage au travers de l'intérieur 214 du cadre aspirant. Un caisson 216 disposé sous la zone centrale de la face inférieure de la feuille 213 permet de communiquer à celle-ci une pression subatmosphérique. Ce caisson est relié de façon étanche au cadre 211 pour pouvoir tenir le vide sous le verre. Il est relié par une canalisation 217 à un système procurant du vide. Un soufflage est généré simultanément au travers de la piste de contact du cadre munie d'orifices. En effet, une chambre close 270 est ménagée sous la piste de contact et une canalisation 271 permet de la relier à un système sous pression permettant de souffler de l'air au travers d'orifices de la surface supérieure usinée du cadre métallique du cadre aspirant et du matériau fibreux 215 la recouvrant. Le matériau en fibres réfractaire 215 adoucit le contact avec le verre. A ce stade, la feuille 213 est prise en charge par le cadre aspirant en position supérieure, le cadre supplémentaire 212 devant ensuite prendre en charge la feuille. L'objectif est de réduire le risque de marquage du verre avec le cadre aspirant. On souffle à travers le cadre pour créer un coussin d'air au niveau de la zone de contact verre/cadre et réduire le risque de marquage du verre. Parallèlement, on aspire la zone centrale du verre pour le maintenir sur le cadre.

La figure 5 représente en coupe vue de côté un dispositif 220 de bombage d'une feuille de verre 223 comprenant un cadre aspirant 221 et un cadre supplémentaire 222 (faisant office de moule de bombage) qui l'entoure. L'aspiration est produite au travers de la piste de contact munie d'orifices 224. Cette piste de contact comprend un matériau en fibres réfractaire 228 adoucissant le contact avec le verre. Un soufflage est généré simultanément en zone centrale du vitrage au travers de l'intérieur 225 du cadre aspirant. Un caisson 226 disposé sous la zone centrale de la face inférieure de la feuille 223 permet de communiquer à celle-ci une pression. Ce caisson est relié de façon étanche au cadre 221 pour pouvoir tenir la pression sous le verre. Il est relié par une canalisation 227 à un système procurant une pression. L'objectif du soufflage est de réduire le risque de marquage du verre avec le cadre aspirant. Une chambre close 280 est ménagée sous la piste de contact et une canalisation 281 permet de la relier à un système sous vide permettant d'aspirer de l'air au travers d'orifices de la surface supérieure usinée du cadre métallique du cadre aspirant et du matériau fibreux 228 la recouvrant. On aspire à travers le cadre pour maintenir le verre en position au niveau de la zone de contact verre/cadre et parallèlement, on souffle sur la zone centrale du verre pour créer un coussin d'air et réduire le poids relatif du verre sur la piste de contact.

La figure 6 représente un cadre aspirant 230 supportant une feuille de verre 231 par une piste de contact 232. Cette piste de contact est constituée d'un matériau fibreux réfractaire 235 recouvrant la surface supérieure usinée 236 du cadre aspirant sous lequel ont été construites deux chambres closes 237 et 238. La chambre 237 peut être mise sous vide afin d'aspirer le verre au travers de la surface usinée percée d'orifices 239 ainsi qu'au travers du matériau fibreux intercalaire 235. Cette aspiration a pour but de renforcer le maintien du verre sur le cadre aspirant. L'intérieur de la chambre close 237 est relié à un système de création de vide par la canalisation 240. L'aspiration passe au travers d'orifices 239 présents dans la surface supérieure usinée 236 du cadre aspirant, et au travers du matériau fibreux 235. La chambre 238 contigüe à la chambre 237 peut être mise sous pression par une canalisation 241. Un soufflage d'air est alors exercé au travers d'orifices 242 percés dans la surface usinée 236 ainsi qu'au travers du matériau fibreux intercalaire 235. L'objectif est de réduire le risque de marquage du verre dû au contact du verre avec le cadre aspirant. On aspire à travers le cadre pour maintenir le verre en position au niveau de la zone de contact verre/cadre correspondant à la chambre 237. Sur ce même cadre aspirant 230, on souffle à travers la piste de contact 236 au-dessus de la chambre 238 pour créer un coussin d'air et réduire le risque de marquage du verre.

## Revendications

1. Cadre pour supporter une feuille de verre, dit cadre aspirant, comprenant une piste de contact pour recevoir la périphérie de la face inférieure de la feuille de verre, et comprenant un système d'aspiration apte à exercer une aspiration sur la face inférieure de la feuille pour accentuer le maintien de la feuille par ledit cadre.

2. Cadre selon la revendication précédente, **caractérisé en ce que** l'aspiration peut être exercée au travers de la piste de contact du cadre aspirant.

3. Cadre selon la revendication précédente **caractérisé en ce que** l'aspiration peut être exercée au travers de zones locales dites zones aspirantes de la piste de contact du cadre aspirant.

4. Cadre selon l'une des revendications précédente, **caractérisé en ce qu'**il comprend au moins une chambre close sous la piste de contact, dite chambre close aspirante, des orifices traversant le cadre entre la chambre close aspirante et la piste de contact, la chambre close aspirante étant reliée au système d'aspiration.

5. Cadre selon l'une des revendications précédentes **caractérisé en ce qu'**il comprend un système de soufflage apte à exercer un soufflage au travers d'au moins une zone locale dite zone soufflante de la piste de contact du cadre aspirant.

6. Cadre selon la revendication précédente, **caractérisé en ce qu'**il comprend au moins une chambre close sous la zone soufflante de la piste de contact, dite chambre close soufflante, des orifices traversant le cadre entre la chambre close soufflante et la piste de contact, la chambre close soufflante étant reliée au système de soufflage.

7. Cadre selon l'une des revendications précédentes, **caractérisé en ce qu'**il est muni d'un caisson disposé sous la zone centrale de la face inférieure de la feuille pour communiquer à celle-ci une pression supérieure à la pression atmosphérique.

8. Cadre selon la revendication 1, **caractérisé en ce que** l'aspiration peut être exercée sur la zone centrale de la feuille au travers de l'intérieur du cadre aspirant.

9. Cadre selon la revendication précédente, **caractérisé en ce qu'**il est muni d'un caisson disposé sous la zone centrale de la face inférieure de la feuille pour pouvoir communiquer à celle-ci une pression subatmosphérique.

10. Cadre selon l'une des revendications précédentes, **caractérisé en ce qu'**il comprend un dispositif de soufflage permettant de souffler de l'air au travers de la piste de contact.

11. Cadre selon l'une des revendications précédentes, **caractérisé en ce que** l'aspiration est suffisante pour rendre le verre solidaire du cadre aspirant pendant une accélération ou décélération d'au moins 1500 mm/sec², voire même d'au moins 3000 mm/sec², voire même d'au moins 5000 mm/sec².

12. Cadre selon l'une des revendications précédentes, **caractérisé en ce que** la piste de contact pour le verre a une largeur d'au moins 25 mm, notamment comprise dans le domaine allant de 25 à 90 mm et de préférence comprise dans le domaine allant de 50 à 90 mm.

13. Dispositif de transport d'une feuille de verre comprenant le cadre aspirant de l'une des revendications précédentes et un moyen de convoyage dudit cadre aspirant.

14. Dispositif selon la revendication précédente, **caractérisé en ce que** le moyen de convoyage peut conférer au cadre aspirant une accélération ou décélération d'au moins 1500 mm/sec², voire même d'au moins 3000 mm/sec², voire même d'au moins 5000 mm/sec², notamment inférieur à 7500 mm/sec².

15. Dispositif selon la revendication précédente, **caractérisé en ce que** l'aspiration est apte à maintenir le verre en position pendant une accélération ou décélération.

16. Dispositif de bombage thermique d'une feuille de verre comprenant le dispositif de transport de l'une des revendications précédentes de dispositif de transport, et une enceinte de chauffage, le dispositif de transport permettant le convoyage du cadre aspirant dans l'enceinte.

17. Dispositif selon la revendication précédente, **caractérisé en ce qu'**il comprend un support de bombage comprenant le cadre aspirant et un moule de bombage, l'un de ces deux éléments entre le cadre aspirant et le moule de bombage étant entouré par l'autre vue de dessus, au moins l'un de ces deux éléments pouvant être animé d'un mouvement vertical relatif par rapport à l'autre.

18. Procédé de transport d'une feuille de verre comprenant le convoyage de la feuille par le dispositif de l'une des revendications de dispositif précédentes, ledit convoyage comprenant une accélération ou décélération, l'aspiration exercée sur la feuille par le système d'aspiration du cadre aspirant étant en fonctionnement pendant ladite accélération ou décélération.

19. Procédé selon la revendication précédente, **caractérisé en ce que** l'accélération ou décélération est d'au moins 1500 mm/sec², voire même d'au moins 3000 mm/sec², voire même d'au moins 5000 mm/sec², notamment inférieur à 7500 mm/sec².

20. Procédé de bombage thermique d'une feuille de verre comprenant le transport de la feuille par le procédé de l'une des deux revendications précédentes, le cadre aspirant supportant la feuille de verre étant convoyé dans une enceinte portée à la température de déformation plastique du verre, puis le bombage de la feuille.

21. Procédé selon la revendication précédente, **caractérisé en ce que** le bombage est réalisé au moins partiellement sur le cadre aspirant, notamment par gravité.

22. Procédé selon l'une des deux revendications précédentes, **caractérisé en ce que** le bombage est réalisé sur un support de bombage comprenant le cadre aspirant et un moule de bombage, l'un de ces deux éléments entre le cadre aspirant et le moule de bombage étant entouré par l'autre vue de dessus, au moins l'un de ces deux éléments étant animé d'un mouvement vertical relatif par rapport à l'autre, pour faire passer la feuille de verre du cadre aspirant au moule de bombage, l'aspiration exercée sur la feuille par le système d'aspiration du cadre aspirant n'étant pas en fonctionnement pendant ce passage.

23. Procédé selon l'une des revendications précédentes de procédé, **caractérisé en ce que** le moyen de convoyage fait passer le cadre aspirant alternativement d'une position à une autre dans l'enceinte en marquant un arrêt en chaque position.

## Patentansprüche

1. Rahmen zum Stützen einer Glasscheibe, Saugrahmen genannt, umfassend eine Kontaktbahn zum Aufnehmen des Umfangs der Unterseite der Glasscheibe und umfassend ein Saugsystem, das in der Lage ist, einen Sog auf die Unterseite der Scheibe auszuüben, um das Halten der Scheibe durch den Rahmen zu verstärken.

2. Rahmen nach dem vorstehenden Anspruch, **dadurch gekennzeichnet, dass** der Sog durch die Kontaktbahn des Saugrahmens hindurch ausgeübt werden kann.

3. Rahmen nach dem vorstehenden Anspruch, **dadurch gekennzeichnet, dass** der Sog durch Saugzonen genannte lokale Zonen der Kontaktbahn des Saugrahmens hindurch ausgeübt werden kann.

4. Rahmen nach einem der vorstehenden Ansprüche, **dadurch gekennzeichnet, dass** er mindestens eine geschlossene Kammer unter der Kontaktbahn, geschlossene Saugkammer genannt, umfasst, wobei Öffnungen den Rahmen zwischen der geschlossenen Saugkammer und der Kontaktbahn durchqueren, wobei die geschlossene Saugkammer mit dem Saugsystem verbunden ist.

5. Rahmen nach einem der vorstehenden Ansprüche, **dadurch gekennzeichnet, dass** er ein Blassystem umfasst, das in der Lage ist, ein Blasen durch mindestens eine lokale Zone der Kontaktbahn des Saugrahmens, Gebläsezone genannt, hindurch auszuüben.

6. Rahmen nach dem vorstehenden Anspruch, **dadurch gekennzeichnet, dass** er mindestens eine geschlossene Kammer unter der Gebläsezone der Kontaktbahn, geschlossene Gebläsekammer genannt, umfasst, wobei Öffnungen den Rahmen zwischen der geschlossenen Gebläsekammer und der Kontaktbahn durchqueren, wobei die geschlossene Gebläsekammer mit dem Blassystem verbunden ist.

7. Rahmen nach einem der vorstehenden Ansprüche, **dadurch gekennzeichnet, dass** er mit einem Druckkasten versehen ist, der unter der zentralen Zone der Unterseite der Scheibe angeordnet ist, um einen Druck oberhalb des atmosphärischen Drucks auf diese zu übertragen.

8. Rahmen nach Anspruch 1, **dadurch gekennzeichnet, dass** der Sog auf die zentrale Zone der Scheibe durch das Innere des Saugrahmens hindurch ausgeübt werden kann.

9. Rahmen nach dem vorstehenden Anspruch, **dadurch gekennzeichnet, dass** er mit einem Druckkasten versehen ist, der unter der zentralen Zone der Unterseite der Scheibe angeordnet ist, um einen subatmosphärischen Druck auf diese übertragen zu können.

10. Rahmen nach einem der vorstehenden Ansprüche, **dadurch gekennzeichnet, dass** er eine Blasvorrichtung umfasst, die ermöglicht, Luft durch die Kontaktbahn hindurch zu blasen.

11. Rahmen nach einem der vorstehenden Ansprüche, **dadurch gekennzeichnet, dass** der Sog ausreicht, um das Glas während einer Beschleunigung oder Verlangsamung von mindestens 1500 mm/s² oder sogar mindestens 3000 mm/s² oder sogar mindestens 5000 mm/s² fest mit dem Saugrahmen zu verbinden.

12. Rahmen nach einem der vorstehenden Ansprüche, **dadurch gekennzeichnet, dass** die Kontaktbahn für das Glas eine Breite von mindestens 25 mm, insbesondere im Bereich von 25 bis 90 mm und vorzugsweise im Bereich von 50 bis 90 mm, aufweist.

13. Vorrichtung zum Transportieren einer Glasscheibe, umfassend den Saugrahmen nach einem der vorstehenden Ansprüche und ein Mittel zum Befördern des Saugrahmens.

14. Vorrichtung nach dem vorstehenden Anspruch, **dadurch gekennzeichnet, dass** das Mittel zum Befördern dem Saugrahmen eine Beschleunigung oder Verlangsamung von mindestens 1500 mm/s² oder sogar von mindestens 3000 mm/s² oder sogar von mindestens 5000 mm/s², insbesondere weniger als 7500 mm/s², verleihen kann.

15. Vorrichtung nach dem vorstehenden Anspruch, **dadurch gekennzeichnet, dass** der Sog in der Lage ist, das Glas während einer Beschleunigung oder Verlangsamung in Position zu halten.

16. Vorrichtung zum thermischen Biegen einer Glasscheibe, umfassend die Transportvorrichtung nach einem der vorstehenden Ansprüche zur Transportvorrichtung und einen Wärmeraum, wobei die Transportvorrichtung das Befördern des Saugrahmens in den Raum ermöglicht.

17. Vorrichtung nach dem vorstehendem Anspruch, **dadurch gekennzeichnet, dass** sie einen Biegeträger umfasst, der den Saugrahmen und eine Biegeform umfasst, wobei eines dieser zwei Elemente zwischen dem Saugrahmen und der Biegeform von oben betrachtet von dem anderen umgeben ist, wobei mindestens eines dieser zwei Elemente relativ zum anderen vertikal in Bewegung versetzt werden kann.

18. Verfahren zum Transportieren einer Glasscheibe, umfassend die Beförderung der Scheibe durch die Vorrichtung nach einem der vorstehenden Vorrichtungsansprüche, wobei die Beförderung eine Beschleunigung oder Verlangsamung umfasst, wobei der Sog, der von dem Saugsystem des Saugrahmens auf die Scheibe ausgeübt wird, während der Beschleunigung oder Verlangsamung in Betrieb ist.

19. Verfahren nach dem vorstehenden Anspruch, **dadurch gekennzeichnet, dass** die Beschleunigung oder Verlangsamung mindestens 1500 mm/s² oder sogar mindestens 3000 mm/s² oder sogar mindestens 5000 mm/s², insbesondere weniger als 7500 mm/s², beträgt.

20. Verfahren zum thermischen Biegen einer Glasscheibe, umfassend das Transportieren der Scheibe durch das Verfahren nach einem der zwei vorstehenden Ansprüche, wobei der die Glasscheibe stützende Saugrahmen in einen Raum befördert wird, der auf die Temperatur zur plastischen Verformung des Glases gebracht wird, anschließend das Biegen der Scheibe.

21. Verfahren nach dem vorstehenden Anspruch, **dadurch gekennzeichnet, dass** das Biegen mindestens teilweise auf dem Saugrahmen erfolgt, insbesondere durch Schwerkraft.

22. Verfahren nach einem der zwei vorstehenden Ansprüche, **dadurch gekennzeichnet, dass** das Biegen auf einem Biegeträger erfolgt, der den Saugrahmen und eine Biegeform umfasst, wobei eines dieser zwei Elemente zwischen dem Saugrahmen und der Biegeform von oben betrachtet von dem anderen umgeben ist, wobei mindestens eines dieser zwei Elemente relativ zum anderen vertikal in Bewegung versetzt wird, um die Glasscheibe vom Saugrahmen zur Biegeform passieren zu lassen, wobei der von dem Saugsystem des Saugrahmens auf die Scheibe ausgeübte Sog während dieses Passierens nicht in Betrieb ist.

23. Verfahren nach einem der vorstehenden Verfahrensansprüche, **dadurch gekennzeichnet, dass** das Mittel zum Befördern den Saugrahmen in dem Raum abwechselnd von einer Position in eine andere passieren lässt, indem an jeder Position ein Stopp markiert wird.

## Claims

1. A frame for supporting a sheet of glass, referred to as a suction frame, comprising a contact path for receiving the periphery of the underside face of the sheet of glass, and comprising a suction system able to apply suction to the underside face of the sheet in order to enhance the retention of the sheet by said frame.

2. The frame as claimed in the preceding claim, **characterized in that** the suction may be applied through the contact path of the suction frame.

3. The frame as claimed in the preceding claim, **characterized in that** the suction may be applied through local zones, referred to as suction zones, of the contact path of the suction frame.

4. The frame as claimed in one of the preceding claims, **characterized in that** it comprises at least one closed chamber under the contact path, referred to as a closed suction chamber, orifices passing through the frame between the closed suction chamber and the contact path, the closed suction chamber being connected to the suction system.

5. The frame as claimed in one of the preceding claims, **characterized in that** it comprises a blowing system able to blow through at least a local zone, referred to as blowing zone, of the contact path of the suction frame.

6. The frame as claimed in the preceding claim, **characterized in that** it comprises at least one closed chamber under the blowing zone of the contact path, referred to as closed blowing chamber, orifices passing through the frame between the closed blowing chamber and the contact path, the closed blowing chamber being connected to the blowing system.

7. The frame as claimed in one of the preceding claims, **characterized in that** it is provided with a plenum positioned below the central zone of the underside face of the sheet in order to impart thereto a pressure higher than atmospheric pressure.

8. The frame as claimed in claim 1, **characterized in that** the suction may be applied to the central zone of the sheet through the inside of the suction frame.

9. The frame as claimed in the preceding claim, **characterized in that** it is provided with a plenum positioned under the central zone of the underside face of the sheet so as to be able to impart thereto a sub-atmospheric pressure.

10. The frame as claimed in one of the preceding claims, **characterized in that** it comprises a blowing device allowing air to be blown through the contact path.

11. The frame as claimed in one of the preceding claims, **characterized in that** the suction is strong enough to secure the glass to the suction frame during an acceleration or deceleration of at least 1500 mm/sec², or even of at least 3000 mm/sec², or even of at least 5000 mm/sec².

12. The frame as claimed in one of the preceding claims, **characterized in that** the contact path for the glass has a width of at least 25 mm, in particular comprised in the range from 25 to 90 mm and for preference comprised in the range from 50 to 90 mm.

13. A device for transporting a sheet of glass comprising the suction frame of one of the preceding claims and a conveying means for conveying said suction frame.

14. The device as claimed in the preceding claim, **characterized in that** the conveying means may confer upon the suction frame an acceleration or deceleration of at least 1500 mm/sec², or even of at least 3000 mm/sec², or even of at least 5000 mm/sec², in particular less than 7500 mm/sec².

15. The device as claimed in the preceding claim, **characterized in that** the suction is able to hold the glass in position during an acceleration or deceleration.

16. A device for the hot-bending of a sheet of glass comprising the transport device of one of the preceding transport-device claims, and a heating enclosure, the transport device allowing the suction frame to be conveyed into the enclosure.

17. The device as claimed in the preceding claim, **characterized in that** it comprises a bending support comprising the suction frame and a bending mold, of these two elements that are the suction frame and the bending mold, one being surrounded by the other when viewed from above, at least one of these two elements being able to be given a relative vertical movement with respect to the other.

18. A method for transporting a sheet of glass comprising the conveying of the sheet using the device of one of the preceding device claims, said conveying comprising an acceleration or deceleration, the suction applied to the sheet by the suction system of the suction frame being in operation during said acceleration or deceleration.

19. The method as claimed in the preceding claim, **characterized in that** the acceleration or deceleration is of at least 1500 mm/sec², or even of at least 3000 mm/sec², or even of at least 5000 mm/sec², in particular less than 7500 mm/sec².

20. A method for the hot-bending of a sheet of glass comprising the transporting of the sheet using the method of one of the two preceding claims, the suction frame supporting the sheet of glass being conveyed into an enclosure raised to the plastic deformation temperature of the glass, followed by the bending of the sheet.

21. The method as claimed in the preceding claim, **characterized in that** the bending is performed at least partially on the suction frame, in particular by gravity bending.

22. The method as claimed in one of the two preceding claims, **characterized in that** the bending is performed on a bending support comprising the suction frame and a bending mold, of these two elements that are the suction frame and the bending mold, one being surrounded by the other when viewed from above, at least one of these two elements being given a relative vertical movement with respect to the other, so as to cause the sheet of glass to transfer from the suction frame to the bending mold, the suction applied to the sheet by the suction system of the suction frame not being in operation during this transfer.

23. The method as claimed in one of the preceding method claims, **characterized in that** the conveying means causes the suction frame to move alternately from one position to another in the enclosure, pausing in each position.
